# EUROPEAN PATENT APPLICATION

(11) **EP 1 839 841 A1**
(43) Date of publication of application: **03.10.2007**
(21) Application number: 07104607.2
(22) Date of filing: 21.03.2007
(51) Int. Cl.: B29C 49/06

(54) **Vertical alternation blow moulding apparatus**

(30) Priority: 29.03.2006 CN 200620006651 U
(71) Applicant: Chang, Tsai-Shun, Taipei Hsien Chung Ho City (TW); Wu, Hsin-Chih, Taiei Hsien Chung-Ho City (TW)
(72) Inventor: Chang, Tsai-Shun, Taipei Hsien Chung Ho City (TW); Wu, Hsin-Chih, Taiei Hsien Chung-Ho City (TW)
(74) Representative: Viering, Hans-Martin

(57) **Abstract**

A vertical alternation type bottle blower includes a bottle blank injection-molding unit (1), which comprises a female mold (11), a male mold (12), and two alternate injection dies (13) each having a connection member at one side, a bottle blowing mechanism (2), which comprises a bottle mold vertically movably mounted in a mold holder and a bottle blower and a top positioning member, a lower delivery mechanism (3) being a horizontally retractable pressure cylinder that has a connection member connectable to the connection member of one injection mold and a lifter for lifting one injection die, and an upper delivery mechanism (4) being a horizontally retractable pressure cylinder that has a connection member connectable to the connection member of one injection mold and a lifter for lifting one injection die. By means of horizontal delivery by the lower delivery mechanism and the upper delivery mechanism and vertical delivery by the lifters, the injection dies are alternatively set between the bottle blank injection-molding unit and the bottle blowing mechanism.

## Description

### BACKGROUND OF THE INVENTION

### Field of the Invention:

The present invention relates to bottle blowers and more particularly, to a vertical alternation type bottle blower, which moves two injection dies horizontally and vertically for injecting bottle blanks and blowing bottle blanks into bottles alternatively.

### Description of the Related Art:

Bottle blowing technology is well developed for industrial application. The operation procedure of a regular bottler blower includes two steps, i.e., the bottle blank forming step and the bottle blowing step. During the bottle blank forming step, an injection machine injects the prepared fluid plastic material into an injection die for molding into a bottle blank. Thereafter, the bottle blowing step is followed to blow the bottle blank into the desired bottle by means of a bottle blowing mechanism. A bottle blowing mechanism for this application can be a rotary type or reciprocating type performed at a working elevation or working surface. Therefore, conventional bottle blowers require a big-area working surface, resulting in a high installation cost.

### SUMMARY OF THE INVENTION

The present invention has been accomplished under the circumstances in view. It is therefore the main object of the present invention to provide a vertical alternation type bottle blower, which moves two injection dies horizontally and vertically for injecting bottle blanks and blowing bottle blanks into bottles alternatively.

To achieve this and other objects of the present invention, the vertical alternation type bottle blower comprises a bottle blank injection-molding unit, the bottle blank injection-molding unit comprising a female mold, a male mold, and two injection dies alternatively set in between the female mold and the male mold for molding a plastic bottle blank, the injection dies each having a connection means at one side and a positioning means at a top side; a bottle blowing mechanism, the bottle blowing mechanism comprising a mold holder, a bottle mold vertically movably mounted in the mold holder, and a bottle blower for blowing a plastic bottle blank in the bottle mold into a bottle, and an ejector for ejecting a bottle out of the bottle mold; a lower delivery mechanism, the lower delivery mechanism comprising a horizontally retractable pressure cylinder, that has a connection means connectable to the connection means of one of the injection molds, and a lifter for lifting one of the injection dies; and an upper delivery mechanism, the upper delivery mechanism comprising a horizontally retractable pressure cylinder, that has a connection means connectable to the connection means of one of the injection molds, and a lifter for lifting one of the injection die.

### BRIEF DESCRIPTION OF THE DRAWINGS

FIG. 1 is a schematic drawing of a vertical alternation type bottle blower according to the present invention, showing one injection die in the bottle blank injection cycle.
FIG. 2 is a schematic drawing of the vertical alternation type bottle blower according to the present invention, showing the lower delivery mechanism connected to one injection die.
FIG. 3 is a schematic drawing of the vertical alternation type bottle blower according to the present invention, showing one injection die delivered to the bottle blowing mechanism and the other delivered to above the bottle blank injection-molding unit.
FIG. 4 is a schematic drawing of the vertical alternation type bottle blower according to the present invention, showing one injection die in the bottle blowing cycle and the other injection die in the bottle blank injection cycle.
FIG. 5 is a schematic drawing of the vertical alternation type bottle blower according to the present invention, showing a finished bottle ejected out of one injection die and the injection die in the injection molding cycle.
FIG 6 is a schematic drawing of the vertical alternation type bottle blower according to the present invention, showing one injection die lifted and the other injection die in the injection molding cycle.

### DETAILED DESCRIPTION OF THE PREFERRED EMBODIMENT

Referring to the annexed drawings in detail, a vertical alternation type bottle blower in accordance with the present invention is shown comprised of a bottle blank injection-molding unit **1,** a bottle blowing mechanism **2,** a lower delivery mechanism **3**, an upper delivery mechanism **4**, and an adapter **5**.

The bottle blank injection-molding unit **1** is comprised of a fixed female mold **11,** a vertically movable male mold **12,** two injection dies **13,** and an injection machine **14.** When the fixed female mold **11,** the male mold **12,** and the injection dies **13** are closed together, the injection machine **14** is operated to inject a bottle blank **A.** The bottle blank injection molding functioning of the bottle blank injection-molding unit **1** is of the known art, no further detailed description in this regard is necessary. The movement of the male mold **12** is controlled by means of a male mold pressure cylinder **121,** and the control can be programmable. During the bottle blank injection molding step, the two injection dies **13** are alternatively operated, thereby diminishing idle time. Each injection die **13** comprises a form plate **131,** a connection means for example a retaining hole **132** at one side of the form plate **131,** a carrier frame **134** carrying the form plate **131.** Further, a pressure cylinder **135** is controlled to move the carrier frame **134** and the form plate **131** carried in the carrier frame **134.** Further, each injection die **13** has a top groove **136** at the intersection between the two die halves thereof.

The bottle blowing mechanism **2** is comprised of a bottle mold **21,** a mold holder **22** holding the bottle mold **21,** and a blower **23** (not shown). When a bottle blank **A** entered the bottle mold **21,** the blower **23** is operated to blow the bottle blank **A** into one finished product, and then an ejector **24** is operated to eject the finished product out of the bottle mold **21.**

The lower delivery mechanism **3** is a pressure cylinder, which is programmably controllable. The lower delivery mechanism **3** has a connection means, for example, arrowhead-like connector **31** connectable to the retaining hole **132** of one injection die **13.** The lower delivery mechanism **3** comprises a lifter **32** for moving injection dies **13,** a retractable positioning member **33** at the top side, a carrier frame **34** for carrying each injection die **13,** and a vertically movable ejector **35** for ejecting the finished product out of the lower delivery mechanism **3.**

The upper delivery mechanism **4** is a pressure cylinder, which is programmably controllable. The upper delivery mechanism **4** has a connection means, for example, arrowhead-like connector **41** connectable to the retaining hole **132** of one injection die **13.** Further, the upper delivery mechanism **4** is movable by a lifter **42.**

The adapter **5** is a pressure cylinder set between the bottle blank injection-molding unit **1** and the bottle blowing mechanism **2** for holding the injection die **13** that is in the idle cycle, comprising a positioning member **51** and a carrier frame **52** for carrying one injection die **13.**

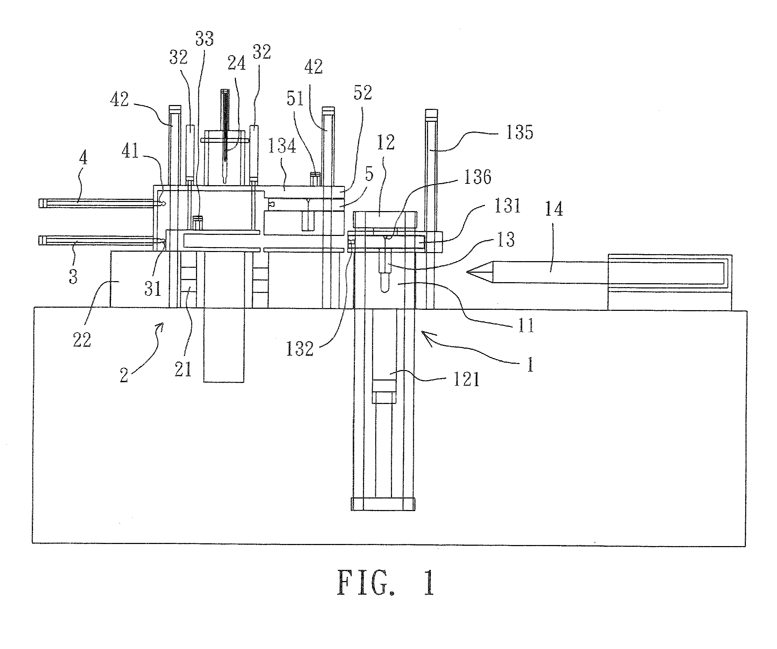

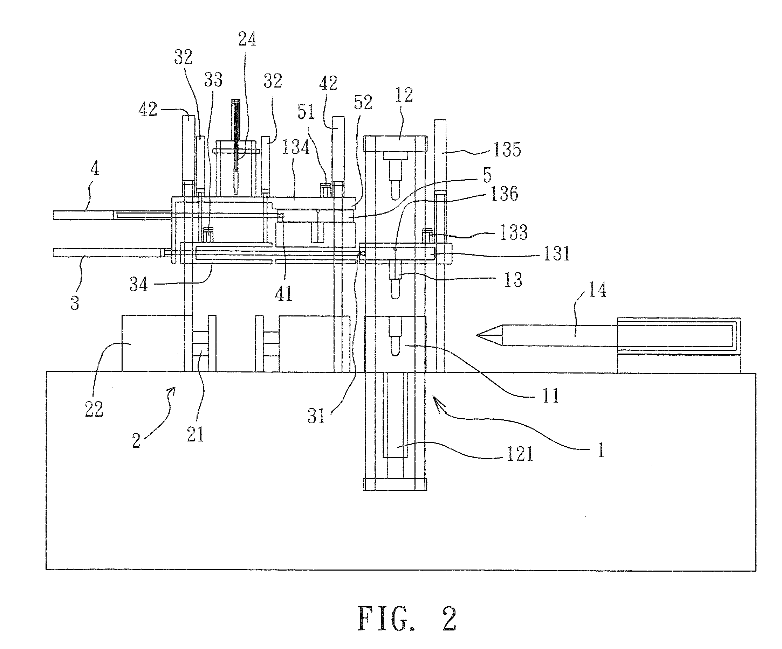

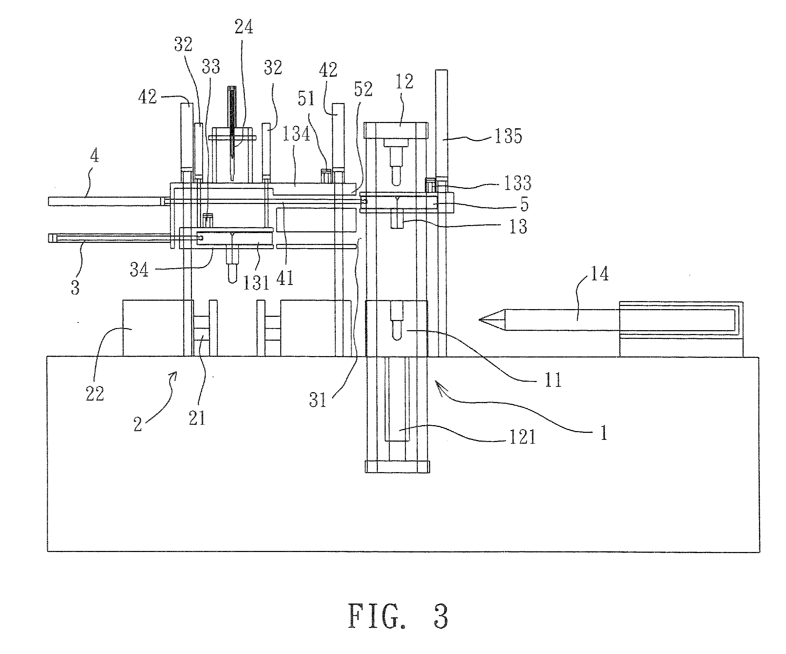

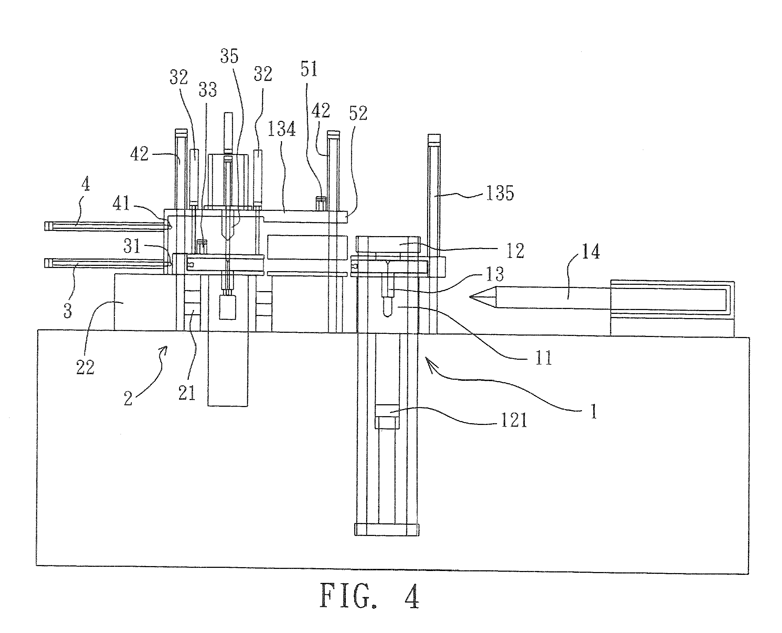

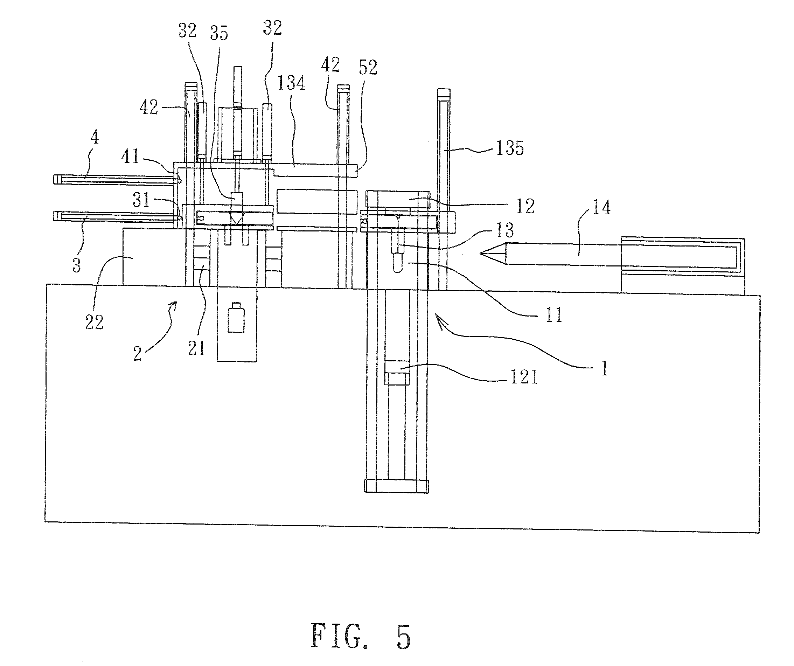

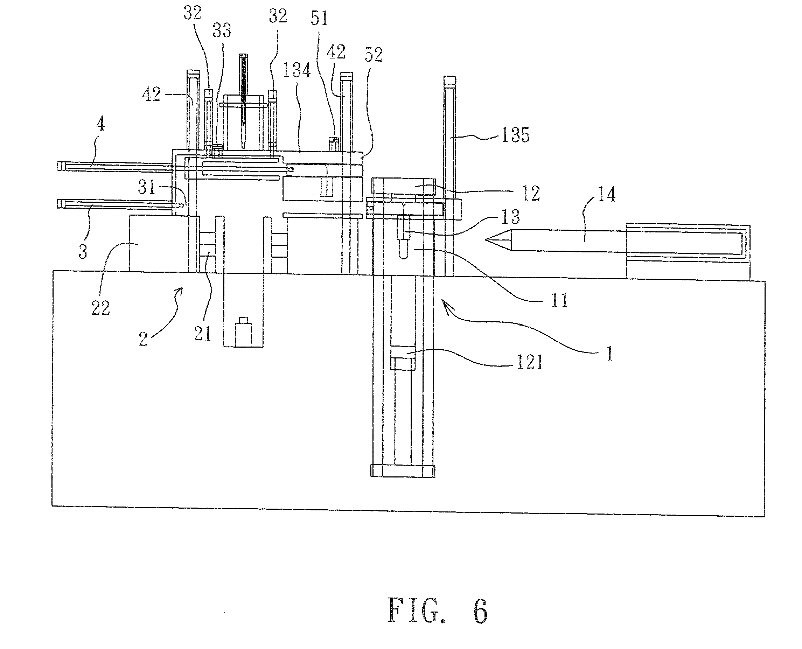

When one injection die **13** is in operation, as shown in FIG. 1, the other injection die **13** is positioned in the adapter **5** in a standby status. At this time, the lower delivery mechanism **3** and the injecting injection die **13** are kept apart. When the injected injection die **13** is opened and lifted and separated from the male mold **12,** as shown in FIG. 2, the connection means **31** of the lower delivery mechanism **3** is connected to the connection means **132** of the injection die **13** that carries a bottle blank, and then injection die **13** carrying a bottle blank is moved to above the bottle blowing mechanism **2,** and the standby injection die **13** is carried by the upper delivery mechanism **4** to the bottle blank injection-molding unit **1,** as shown in FIG. 3. Thereafter, as shown in FIG. 4, the bottle blowing mechanism **2** is operated to blow the bottle blank that is carried on one injection die **13,** and the other injection die **13** in the bottle blank injection-molding unit **1** is driven to inject a bottle blank. After blowing, the ejector **24** is operated to eject the finished bottle out of the mold while the bottle blank injection operation at the other injection die **13** is still running. During the injection molding action of one injection die **13** in the bottle blank injection-molding unit **1** as shown in FIGS. 5 and 6, the other injection die **13** from which the duly finished bottle is ejected out by the ejector **24** is lifted and carried by the upper delivery mechanism **4** to the adapter **5** for a next injection molding cycle.

The aforesaid procedure is repeated again and again, achieving automatic fabrication. By means of up and down (vertical) alternation, the invention saves much horizontal space, facilitating workplace arrangement and installation cost. Further, the invention adopts programmable control, providing light, thin, short, small, and automation characteristics.

Although a particular embodiment of the invention has been described in detail for purposes of illustration, various modifications and enhancements may be made without departing from the spirit and scope of the invention.

## Claims

1. A vertical alternation type bottle blower comprising:
a bottle blank injection-molding unit, said bottle blank injection-molding unit comprising a female mold, a male mold, and two injection dies alternatively set in between said female mold and said male mold for molding a plastic bottle blank, said injection dies each having a connection means at one side and a positioning means at a top side;
a bottle blowing mechanism, said bottle blowing mechanism comprising a mold holder, a bottle mold vertically movably mounted in said mold holder, and a bottle blower for blowing a plastic bottle blank in said bottle mold into a bottle, and an ejector for ejecting a bottle out of said bottle mold;
a lower delivery mechanism, said lower delivery mechanism comprising a horizontally retractable pressure cylinder, that has a connection means connectable to the connection means of one of said injection molds, and a lifter for lifting one of said injection dies; and
an upper delivery mechanism, said upper delivery mechanism comprising a horizontally retractable pressure cylinder, that has a connection means connectable to the connection means of one of said injection molds, and a lifter for lifting one of said injection die.

2. The vertical alternation type bottle blower as claimed in claim 1, further comprising an adapter set between said bottle blank injection-molding unit and said bottle blowing mechanism.

3. The vertical alternation type bottle blower as claimed in claim 1, wherein said bottle blank injection-molding unit further comprises an injection machine.

4. The vertical alternation type bottle blower as claimed in claim 1, further comprising an ejector for ejecting out the finished product.

5. The vertical alternation type bottle blower as claimed in claim 1, wherein the connection means of each of said lower delivery mechanism and said upper delivery mechanism is an arrowhead-like connector, and the connection means of each of said injection dies fits the shape of said arrowhead-like connector.
